# EUROPEAN PATENT APPLICATION

(11) **EP 4 464 220 A1**
(43) Date of publication of application: **20.11.2024**
(21) Application number: 22919763.7
(22) Date of filing: 27.06.2022
(51) Int. Cl.: A47L 11/00

(54) **AUTOMATIC CLEANING APPARATUS**

(30) Priority: 11.01.2022 CN 202210028857
(71) Applicant: Beijing Roborock Technology Co., Ltd., Beijing 102206 (CN)
(72) Inventor: LI, Haibin, Beijing 102206 (CN); ZHANG, Zhibin, Beijing 102206 (CN); LIU, Yanhui, Beijing 102206 (CN)
(74) Representative: Studio Torta S.p.A.
(86) International application number: PCT/CN2022/101595
(87) International publication number: WO 2023/134126

(57) **Abstract**

Provided is an automatic cleaning apparatus, comprising: a moving platform (100) comprising an accommodating cavity (1011); and a position determining device (121), at least a part of the position determining device being provided in the accommodating cavity (1011); a circuit board (105) provided in the moving platform (100) and disposed adjacent to the accommodating cavity (1011); and a water retaining support (104) provided between the circuit board (105) and the accommodating cavity (1011) so as to prevent liquid from flowing into the circuit board (105). The automatic cleaning apparatus has a waterproof function.

## Description

### CROSS REFERENCE TO RELATED APPLICATIONS

This application claims priority of Chinese Patent Application No. 202210028857.9 filed on January 11, 2022, which is incorporated herein by reference in its entirety as a part of the present application.

### TECHNICAL FIELD

The present disclosure relates to the field of cleaning robot technology, and in particular to an automatic cleaning device.

### BACKGROUND

With the continuous development of science and technology, cleaning robots, which bring convenience to families and their lives, are becoming more and more popular. Automatic cleaning devices, for example, include sweeping robots, mopping robots, sweeping and mopping integrated robots, and the like. The functions and structures of the cleaning robots are getting increasingly complex as automatic cleaning devices become increasingly popular.

When the automatic cleaning device operates in a high humidity environment (e.g., a kitchen or a bathroom), there is a risk of water ingress inside the automatic cleaning devices, which can threaten a circuit board or other components, cause damage to devices, etc., and can thus damage the automatic cleaning device.

### SUMMARY

The object of the present disclosure is to provide an automatic cleaning device, which can solve at least one of technical problems as mentioned above. The specific schemes are as follows.

According to embodiments of the present disclosure, the present disclosure provides an automatic cleaning device. The automatic cleaning device includes: a mobile platform, including an accommodation chamber; a position determination apparatus, at least partially arranged inside the accommodation chamber; a circuit board, arranged in the mobile platform and adjacent to the accommodation chamber; and a water-retaining frame, arranged between the circuit board and the accommodation chamber, to prevent liquid from flowing into a circuit.

Optionally, the water-retaining frame includes: a bottom wall, arranged at a first end of the circuit board close to the accommodation chamber and extending along at least a part of an edge of the first end; and a sidewall, extending from an edge of the bottom wall close to the circuit board in a direction substantially perpendicular to the bottom wall, wherein a free end of the sidewall away from the bottom wall is further away from a bottom surface of the mobile platform than the circuit board.

Optionally, the position determination apparatus includes: a position determination unit and a protection cap, buckled on the position determination unit and including a bottom plate and a buckling cover, protruding from the bottom plate and configured to accommodate at least a part of the position determination unit; wherein a liquid guide hole is formed at a junction between the bottom plate and the buckling cover, to enable the liquid falling on the bottom plate to fall into the accommodation chamber through the liquid guide hole.

Optionally, the mobile platform includes: a mobile platform body, wherein the accommodation chamber is formed in the mobile platform body; and a platform cover body, including an opening hole, wherein the platform cover body substantially covers the bottom plate in response that the platform cover body is buckled on the mobile platform body, and at least a part of the buckling cover passes through the opening hole, and wherein a water-retaining rib that protrudes toward the mobile platform body is arranged on a side of the platform cover body facing the mobile platform body.

Optionally, in response that the platform cover body is buckled on the mobile platform body, the water-retaining rib is located at a first end of the circuit board close to the accommodation chamber, and is located on a side of the water-retaining frame away from the circuit board.

Optionally, at least a part of the bottom plate is overlaps with the bottom wall of the water-retaining frame, and a liquid guide groove is formed between an edge of the bottom plate close to the water-retaining frame and the sidewall of the water-retaining frame, and wherein the liquid guide groove is configured to guide the liquid falling on the bottom plate into the accommodation chamber.

Optionally, wherein the accommodation chamber is provided with a water-retaining wall, and the water-retaining wall is configured to guide the liquid that enters the accommodation chamber through the liquid guide groove to flow to a bottom of the accommodation chamber, to prevent splashing to the outside.

Optionally, a liquid drainage hole is formed at a bottom of the accommodation chamber, to enable the liquid collected into the accommodation chamber to flow out of the accommodation chamber.

Optionally, the mobile platform includes: a mobile platform body, wherein the accommodation chamber is formed in the mobile platform body; and a platform bottom plate buckled at a bottom of the mobile platform body, wherein the platform bottom plate is provided with an accommodation groove, the accommodation groove is configured to accommodate the liquid discharged from the liquid drainage hole, and an orthographic projection of the liquid drainage hole on the platform bottom plate is within the accommodation groove.

Optionally, a sidewall of the accommodation groove is provided with a liquid drainage port.

Optionally, the platform bottom plate further includes a mouth, configured to expose at least a part of a dry cleaning module of the automatic cleaning device so as to be communicated with the mobile platform body, wherein the accommodation groove is adjacent to the mouth, and the liquid drainage port is configured to guide the liquid in the accommodation groove to flow out of the automatic cleaning device through the mouth.

Optionally, one end of the bottom plate is pivotally connected to the water-retaining frame through a pivot shaft; and a triggering protrusion is arranged on a bottom surface of the other end of the bottom plate away from the water-retaining frame; wherein the automatic cleaning device further includes a triggering assembly arranged on the mobile platform, and the triggering assembly includes a triggering button configured to be pressed by the triggering protrusion, to enable the automatic cleaning device to perform an anti-jamming action.

Optionally, the mobile platform is provided with a receiving groove, and the triggering assembly further includes an elastic plate member which is arranged in the receiving groove, wherein elastic plate member the is substantially parallel to a bottom of the receiving groove and is spaced from the bottom of the receiving groove; and the elastic plate member includes: a fixed end portion fixedly connected to a sidewall of the receiving groove, and a free end portion arranged in a suspended manner, wherein the triggering button is arranged on the elastic plate member and located at the free end portion.

Optionally, the position determination apparatus is a laser ranging apparatus, and the position determination unit is a laser ranging unit.

Compared with the prior art, the embodiments of the present disclosure have the following technical effects.

According to the automatic cleaning device provided by the present disclosure, the water-retaining frame is arranged between the circuit board and the accommodation chamber, which can prevent the liquid entering from outside flowing into the circuit board and avoid the damage to the circuit components. In addition, the triggering assembly is arranged on the position determination apparatus, which is simple in structure and low in cost.

### BRIEF DESCRIPTION OF THE DRAWINGS

The drawings, which are incorporated in and constitute a part of this specification, illustrate embodiments consistent with the present disclosure, and serve together with the specification to explain principles of the present disclosure. It is apparent that the drawings in the following description are only some embodiments of the present disclosure, and for those of ordinary skill in the art, other drawings can also be obtained from these drawings without creative efforts, in which:
FIG. 1 is a schematic structural diagram of an automatic cleaning device according to some embodiments of the present disclosure;
FIG. 2 is a schematic structural diagram of a bottom of an automatic cleaning device according to some embodiments of the present disclosure;
FIG. 3 is a schematic top view of a mobile platform body in the automatic cleaning device shown in FIG. 1;
FIG. 4 is a schematic top view of a platform cover body assembled at an upper part of a mobile platform body in the automatic cleaning device shown in FIG. 1;
FIG. 5 is a schematic top view of a platform bottom plate assembled on a mobile platform body in the automatic cleaning device shown in FIG. 1;
FIG. 6 is a schematic structural diagram of a water-retaining frame according to some embodiments of the present disclosure;
FIG. 7 is a schematic structural diagram of a position determination apparatus according to some embodiments of the present disclosure;
FIG. 8 is a schematic structural diagram of assembling of the position determination apparatus shown in FIG. 7 and a mobile platform;
FIG. 9 is a schematic structural diagram of a protection cap in the position determination apparatus shown in FIG. 7;
FIG. 10 is a schematic structural diagram of a bottom of the protection cap shown in FIG. 9;
FIG. 11 is a schematic structural diagram of assembling of a mobile platform, a position determination apparatus, and a triggering assembly according to some embodiments of the present disclosure;
FIG. 12 is an enlarged schematic diagram of the triggering assembly in the assembly structure shown in FIG. 11; and
FIG. 13 is an exploded schematic diagram of the triggering assembly shown in FIG. 12.

### Reference numerals in the drawings:

mobile platform 100; forward portion 111; backward portion 110; mobile platform body 101; accommodation chamber 1011; water-retaining wall 10111; liquid drainage hole 10112; receiving groove 1012; buckle 10121; platform cover body 102; opening hole 1021; water-retaining rib 1022; pick-and-place port 1023; platform bottom plate 103; accommodation groove 1031; liquid drainage port 1032; mouth 1033; water-retaining frame 104; bottom wall 1041; sidewall 1042; first sidewall 10421; second sidewall 10422; third sidewall 10423; fourth sidewall 10424; fifth sidewall 10425; pivot shaft 1043; mounting hole 1044; circuit board 105; sensing system 120; position determination apparatus (e.g., laser ranging apparatus) 121; position determination unit (e.g., laser ranging unit) 1210; protection cap 1220; bottom plate 1221; opening 12210; buckling cover 1222; window 12220; liquid guide hole 1223; pivot structure 1224; liquid guide groove 1225; buffer 122; cliff sensor 123; control system 130; driving system 140; driving wheel assembly 141; steering assembly 142; cleaning module 150; dry cleaning module 151; side brush 152; dust box 153; energy system 160; human-machine interaction system 170; triggering system 180; triggering protrusion 181; triggering assembly 182; triggering button 1821; elastic plate member 1822; fixed end portion 18221; free end portion 18222; anti-upwarp buckle 1823; and positioning column 1824.

### DETAILED DESCRIPTION

To make the objectives, technical solutions and advantages of the present disclosure clearer, the present disclosure will be further described in detail in the following with reference to the drawings. It is obvious that the described embodiments are only some, but not all of the embodiments of the present disclosure. All other embodiments obtained by those of ordinary skill in the art based on the embodiments in the present disclosure without creative efforts are within the protection scope of the present disclosure.

The terms used in the embodiments of the present disclosure are only for the purpose of describing particular embodiments, and are not intended to limit the present disclosure. The singular forms "a/an", "said" and "the" used in the embodiments and the appended claims of the present disclosure are intended to include the plural forms as well, unless otherwise indicated clearly in the context. The term "a plurality of' generally includes at least two.

It should be understood that the term "and/or" used herein only describes an associated relationship of associated objects, indicating three kinds of relationships. For example, A and/or B can represent that A exists alone, A and B exist concurrently, and B exists alone. In addition, the character "j" herein generally indicates that the associated objects are in an "or" relationship.

It should be understood that although the terms first, second, third, etc. may be used in the embodiments of the present application to describe certain objects, these objects should not be limited by these terms. These terms are only used to distinguish the objects. For example, a first object may also be referred to as a second object, and similarly, a second object may also be referred to as a first object, without departing from the scope of the embodiments of the present disclosure.

It should also be noted that the terms "comprise", "include" or any other variants are intended to cover the nonexclusive inclusion, such that the commodities or apparatuses including a series of elements not only include those elements, but also include other elements not listed explicitly, or inherent elements of such commodities or apparatuses. Without more limitations, the element defined by the phrase "comprising a ..." does not exclude the existence of other identical elements in the commodity or apparatus that includes such an element.

Embodiments of the present disclosure will be described in detail in the following with reference to the drawings.

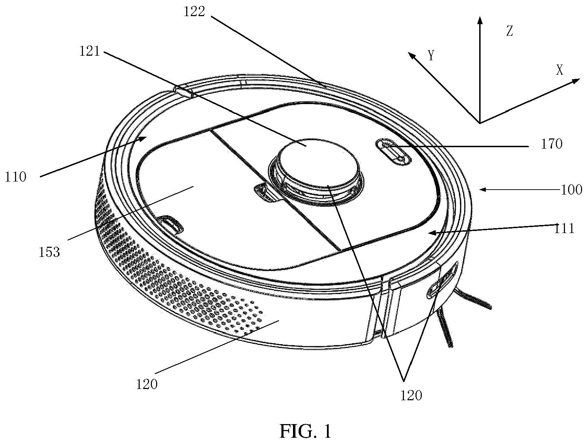

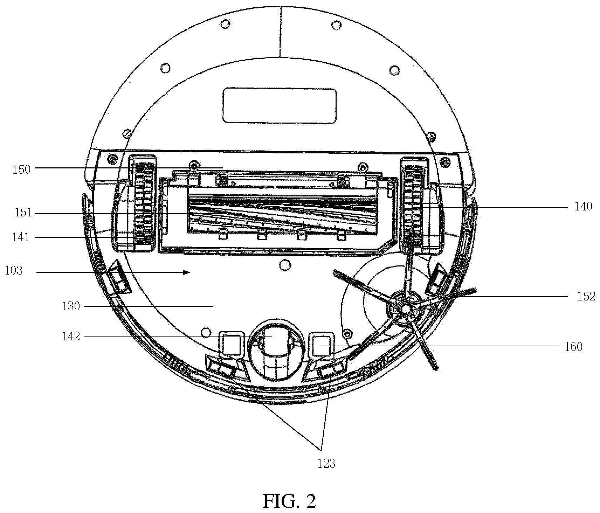

FIGS. 1 and 2 are schematic structural diagrams of an automatic cleaning device according to some embodiments of the present disclosure. As shown in FIGS. 1 and 2, the automatic cleaning device may be a vacuum cleaning robot, or may be a mopping/brushing robot, or may be a window climbing robot, or the like. The automatic cleaning device may include a mobile platform 100, a sensing system 120, a control system 130, a driving system 140, a cleaning module 150, an energy system 160, and a human-machine interaction system 170.

The mobile platform 100 may be configured to automatically move on an operation surface in a target direction. The operation surface may be a surface to be cleaned by the automatic cleaning device. In some embodiments, the automatic cleaning device may be a mopping robot, in which case the automatic cleaning device is operated on a floor, and the floor serves as the operation surface. The automatic cleaning device may also be a window cleaning robot, in which case the automatic cleaning device is operated on the exterior surface of glass of a building. The automatic cleaning device may also be a pipeline cleaning robot, in which case the automatic cleaning device is operated on the interior surface of a pipeline, and the interior surface of the pipeline serves as the operation surface. Merely for the purpose of illustration, the following descriptions of the present disclosure are given by taking a mopping robot as an example.

In some embodiments, the mobile platform 100 may be an autonomous mobile platform or a non-autonomous mobile platform. The autonomous mobile platform means that the mobile platform 100 itself can automatically and adaptively make operation decisions according to unexpected environmental inputs, while the non-autonomous mobile platform itself, instead of adaptively making operation decisions according to unexpected environmental inputs, can execute given programs or run according to certain logic. Correspondingly, in the case where the mobile platform 100 is the autonomous mobile platform, the target direction may be autonomously determined by the automatic cleaning device. In the case where the mobile platform 100 is the non-autonomous mobile platform, the target direction may be set systematically or manually. When the mobile platform 100 is the autonomous mobile platform, the mobile platform 100 includes a forward portion 111 and a backward portion 110.

As shown in FIGS. 1 and 2, the sensing system 120 includes a position determination apparatus 121 located on the mobile platform 100, a buffer 122 located at the forward portion of the mobile platform 100, and a sensing device such as a cliff sensor 123, an ultrasonic sensor (not shown in the drawings), an infrared sensor (not shown in the drawings), a magnetometer (not shown in the drawings), an accelerometer (not shown in the drawings), a gyroscope (not shown in the drawings) and an odometer (not shown in the drawings), which are located at the bottom of the mobile platform for providing various position information and motion state information of the automatic cleaning device for the control system 130.

In order to describe behaviors of the automatic cleaning device more clearly, directions are defined as follows: the automatic cleaning device may travel on the floor by means of various combinations of movements relative to the following three mutually perpendicular axes defined by the mobile platform 100: a transversal axis Y, a front-back axis X, and a central vertical axis Z. A forward driving direction along the front-back axis X is designated as "forward", and a backward driving direction along the front-back axis X is designated as "backward". The transversal axis Y extends substantially between a right wheel and a left wheel of the automatic cleaning device along a center of an axis defined by a center point of a driving wheel assembly 141. The automatic cleaning device may rotate about the axis Y. It is referred to as "pitch up" when the forward portion of the automatic cleaning device is tilted upward and the backward portion thereof is tilted downward, and it is referred to as "pitch down" when the forward portion of the automatic cleaning device is tilted downward and the backward portion thereof is tilted upward. In addition, the automatic cleaning device may rotate around the axis Z. In the forward direction of the automatic cleaning device, it is referred to as "turn right" when the automatic cleaning device is tilted to the right of the axis X, and it is referred to as "turn left" when the automatic cleaning device is tilted to the left of the axis X.

As shown in FIG. 2, the cliff sensors 123 are provided at the bottom of the mobile platform 100 and in front and at rear of the driving wheel assembly 141, respectively, for preventing the automatic cleaning device from falling off when the automatic cleaning device retreats, so as to avoid damage to the automatic cleaning device. The aforementioned "front" refers to a side in the same as a travelling direction of the automatic cleaning device, and the aforementioned "rear" refers to a side in a direction opposite to the travelling direction of the automatic cleaning device.

The various components in the sensing system 120 may be operated independently or jointly to achieve intended functions more accurately. The surface to be cleaned is identified by the cliff sensor 123 and the ultrasonic sensor to determine the physical properties of the surface to be cleaned, including surface materials, the degree of cleanliness, etc., and may be more accurately determined in combination with the camera, and the laser distance sensor, etc.

For example, whether the surface to be cleaned is a carpet may be determined by the ultrasonic sensor, and if the ultrasonic sensor determines that the surface to be cleaned is made of a carpet material, the control system 130 controls the automatic cleaning device to perform cleaning in a carpet mode.

The forward portion of the mobile platform 100 is provided with the buffer 122. The buffer 122 detects one or more events (or objects) in a travelling path of the automatic cleaning device via the sensing system (for example, an infrared sensor) when the driving wheel assembly 141 propels the automatic cleaning device to travel on the floor in the process of cleaning. The automatic cleaning device may control the driving wheel assembly 141 according to the events (or objects), such as an obstacle and a wall, detected by the buffer 122, to enable the automatic cleaning device to respond to the events (or objects), for example, to move away from the obstacle.

The control system 130 is disposed on a circuit board in the mobile platform 100, and includes a computing processor, such as a central processing unit or an application processor, which communicates with a non-transitory memory such as a hard disk, a flash memory and a random access memory. The application processor is configured to receive environmental information sensed by the plurality of sensors and transmitted from the sensing system 120, depict an instant map of an environment where the automatic cleaning device is located using a positioning algorithm, e.g., simultaneous localization and mapping (SLAM), based on obstacle information fed back by the position determination apparatus, and autonomously determine a traveling path based on the environmental information and the environmental map, to control the driving system 140 to travel forward, travel backward, and/or steer based on the autonomously determined traveling path. In some embodiments, the control system 130 may also determine, based on the environmental information and the environmental map, whether to activate the cleaning module 150 to perform a cleaning operation.

In some embodiments, the control system 130 may comprehensively determine a current operation state of the sweeping robot, based on distance information and speed information which are fed back by the buffer 122 and the sensing devices such as the cliff sensor 123, the ultrasonic sensor, the infrared sensor, the magnetometer, the accelerometer, the gyroscope and the odometer. The current operation state of the sweeping robot, for example, includes crossing a doorsill, moving onto a carpet, standing at an edge of a cliff, being stuck at the top or bottom, having a full dust box or being picked up. The control system 130 may also give specific next-step action strategies for different situations, so that the action of the automatic cleaning apparatus is more in line with requirements of an owner and provides better user experience. Further, the control system can plan the most efficient and reasonable cleaning path and cleaning mode based on the information of the instant map depicted by the SLAM, thereby greatly improving the cleaning efficiency of the automatic cleaning device.

The driving system 140 may execute a driving command based on specific distance and angle information, such as x, y, and θ components, to control the automatic cleaning device to travel across the floor. As shown in FIG. 2, the driving system 140 includes the driving wheel assembly 141, and may control a left wheel and a right wheel simultaneously. In order to control the movement of the automatic cleaning device more precisely, the driving system 140 optionally includes a left driving wheel assembly and a right driving wheel assembly that are assembly arranged symmetrically along a transversal axis defined by the mobile platform 100.

In order to enable the automatic cleaning device to move on the floor more stably or have a stronger movement ability, the automatic cleaning device may include one or more steering assemblies 142. The steering assembly 142 may be a driven wheel or a driving wheel, and may structurally include but is not limited to a universal wheel. The steering assembly 142 may be located in front of the driving wheel assembly 141.

The energy system 160 includes a rechargeable battery, such as a nickel-hydrogen battery and a lithium battery. The rechargeable battery may be connected with a charging control circuit, a battery pack charging temperature detecting circuit and a battery undervoltage monitoring circuit, which are then connected to a single-chip microcomputer control circuit. A host of the automatic cleaning device is connected to a charging station through a charging electrode disposed on a side of or below a body of the automatic cleaning device for charging.

The human-machine interaction system 170 includes buttons that are on a panel of the host for a user to select functions. The human-machine interaction system 170 may further include a display screen and/or an indicator light and/or a speaker, as well as a mobile client program. The display, the indicator light and the speaker present a current state or function options of the automatic cleaning device to the user. For a route navigation type cleaning device, a mobile phone client may present a map of the environment where the device is located and a position of the device to the user, thereby providing richer and more user-friendly function items to the user.

As shown in FIG. 2, the cleaning module 150 may include a dry cleaning module 151. The dry cleaning module 151 includes a rolling brush, a dust box and a fan. The rolling brush having a certain interference with the floor sweeps up garbage on the floor and rolls up the garbage to the front of a dust suction inlet between the rolling brush and the dust box. The garbage is then sucked into the dust box by air having a suction force, which is generated by the fan and passes through the dust box 153. The dry cleaning module may further include a side brush 152 having a rotating shaft which is at an angle to the floor, for moving debris into a rolling brush region of the cleaning module 150.

As an optional cleaning module, the automatic cleaning device may further include a wet cleaning module configured to clean at least part of the operation surface in a wet cleaning manner. The wet cleaning module includes a water tank, a cleaning head, a driving unit, and the like. Water from the water tank flows along a water path to the cleaning head, and the cleaning head cleans at least part of the operation surface under the driving of the driving unit.

In the related art, there is a risk of water ingress inside the automatic cleaning device because a top of the automatic cleaning device is not completely enclosed. For example, if a user accidentally spills water on the automatic cleaning device, the water may enter the automatic cleaning device through a gap on a top cover of the automatic cleaning device (e.g., a gap at the position determination apparatus), which may threaten components such as a circuit board, resulting in damage to the automatic cleaning device. The present disclosure provides an automatic cleaning device. The automatic cleaning device includes a mobile platform including an accommodation chamber; a position determination apparatus, at least part of which being arranged inside the accommodation chamber; a circuit board arranged in the mobile platform and adjacent to the accommodation chamber; and a water-retaining frame arranged between the circuit board and the accommodation chamber to prevent liquid from flowing into the circuit. In some embodiments, the position determination apparatus includes a position determination unit and a protection cap. The position determination apparatus may be an image capturing apparatus, a laser ranging apparatus, etc. The embodiments of the present disclosure are generally described by specifically taking the laser ranging apparatus as an example. In some embodiments, the position determination unit is a laser ranging unit.

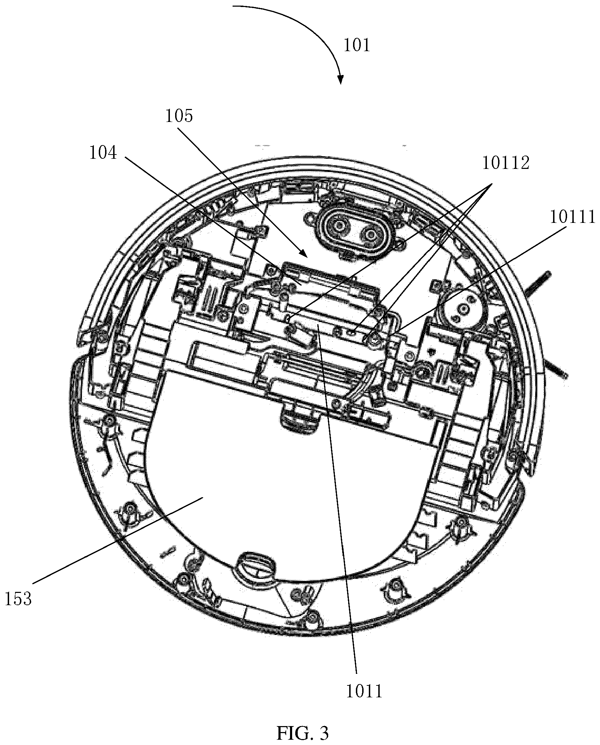

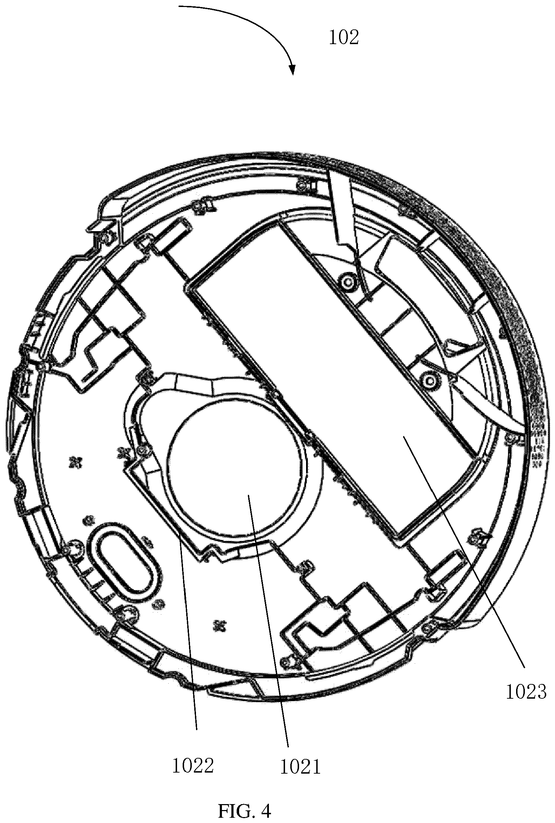

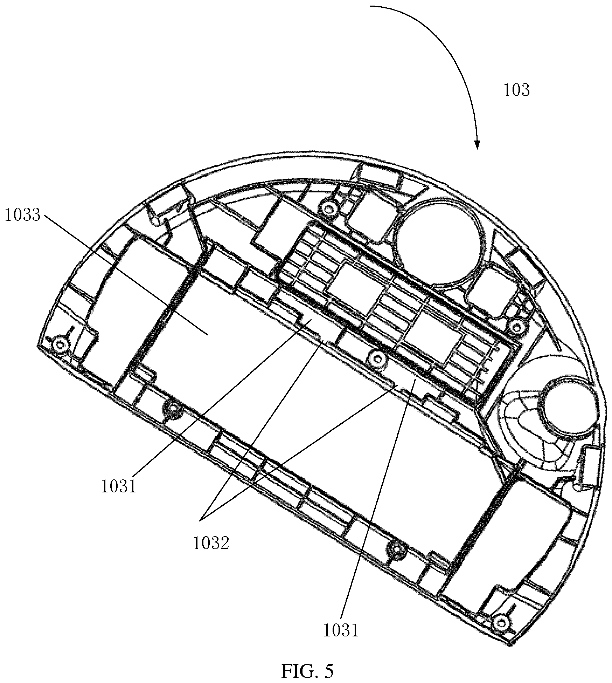

FIG. 3 is a schematic top view of a mobile platform body in the mobile platform provided by some embodiments of the present disclosure. FIG. 4 is a schematic top view of a platform cover body assembled at the upper part of the mobile platform body provided by some embodiments of the present disclosure. FIG. 5 is a schematic top view of a platform bottom plate assembled on the mobile platform body provided by some embodiments of the present disclosure. As shown in FIGS. 1-5, the present disclosure provides an automatic cleaning device.

The automatic cleaning device includes a mobile platform 100, a position determination apparatus 121 (e.g., a laser ranging apparatus), a circuit board 105 and a water-retaining frame 104. The mobile platform 100 includes an accommodation chamber 1011. The position determination apparatus 121 is at least partially arranged inside the accommodation chamber. The circuit board 105 is arranged in the mobile platform 100. The circuit board 105 is configured to bear various electronic components of the automatic cleaning device and is arranged in adjacent to the accommodation chamber 1011. The water-retaining frame 104 is arranged between the circuit board 105 and the accommodation chamber 1011, so as to prevent liquid from flowing into the circuit board 105, thereby avoiding the damage to the electronic components on the circuit board 105.

In some embodiments, the mobile platform 100 includes a mobile platform body 101, a platform cover body 102 and a platform bottom plate 103. The structures of the platform cover body 102 and the platform bottom plate 103 are both adaptive to the structure of the mobile platform body 101, which may be provided specifically according to the actual product. In some embodiments, the mobile platform body 101 can drive the automatic cleaning device to move and do various cleaning work. The mobile platform body 101 is provided with an accommodation chamber 1011, and the accommodation chamber 1011 is configured to accommodate at least part of the structure of the position determination apparatus 121.

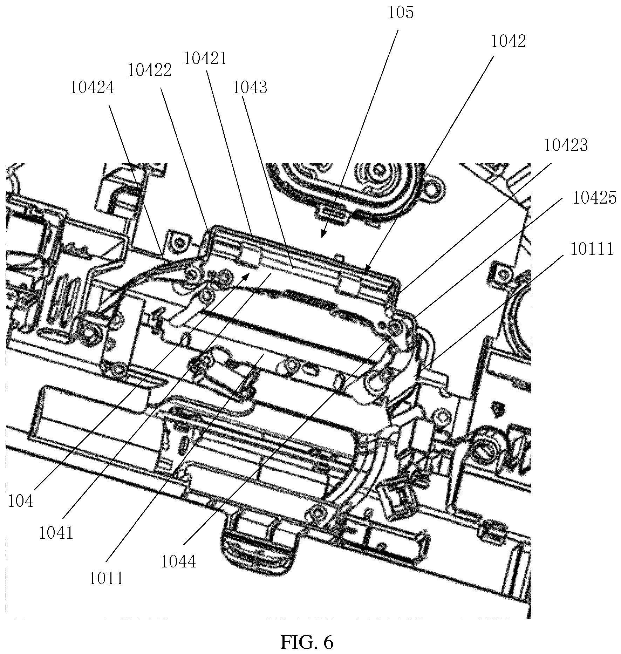

The accommodation chamber 1011 is a hollow chamber. A water-retaining wall 10111 is arranged in the accommodation chamber and configured to guide the liquid that enters the accommodation chamber to flow to the bottom in the accommodation chamber, to prevent splashing to the outside. In some embodiments, as shown in FIG. 6 in the following, the water-retaining wall 10111 is a part of a sidewall of the accommodation chamber 1011.

A liquid drainage hole 10112 is formed at the bottom of the accommodation chamber 1011, such that the liquid collected to the accommodation chamber flows out of the accommodation chamber. In some embodiments, a plurality of liquid drainage holes 10112 are provided, and formed at different positions of an edge at the bottom of the accommodation chamber respectively. A water path is formed on the water-retaining wall 10111 and at the bottom of the accommodation chamber, so that the liquid entering the accommodation chamber basically all flows into the liquid drainage hole(s) 10112.

The mobile platform body 101 also has an accommodation space (not shown in the drawings), which is configured to accommodate the dust box 153 in the cleaning module 150.

The platform cover body 102 is the top of the automatic cleaning device, and has an opening hole 1021. The platform cover body 102 basically covers the position determination apparatus 121 in response to the platform cover body 102 being buckled on the mobile platform body 101. Part of the structure of the position determination apparatus passes through the opening hole 1021 and is exposed to an external environment.

A water-retaining rib 1022 that protrudes toward the mobile platform body is also arranged on one side of the platform cover body 102 facing the mobile platform body 101. In response to the platform cover body 102 being buckled on the mobile platform body 101, the water-retaining rib 1022 is located between the circuit board 105 and the accommodation chamber 1011, and is located on a side of the water-retaining frame 104 away from the circuit board 105. The water-retaining rib 1022 can effectively guide condensed water formed on an inner surface of an upper shell after water vapor that may appear in the automatic cleaning device rises and condenses, so as to prevent the situation where the condensed water moves along the surface of the platform cover body 102 facing the mobile platform body, crosses the water-retaining frame 104 from above, flows across the upper side of the circuit board 105 and drips, which may damage the electronic components on the circuit board 105.

The platform cover body 102 further has a pick-and-place port 1023, and the dust box 153 can be inserted and removed via the pick-and-place port 1023. An orthographic projection of the pick-and-place port 1023 in the mobile platform falls within the receiving space. After the dust box is inserted into the receiving space, a surface of the dust box away from the platform bottom plate is coplanar with the platform cover body. That is, an upper surface of the dust box serves as a part of the upper surface of the automatic cleaning device. In this way, there is no need to provide a flip-up cover, which simplifies the structure of the device, and further improves the technological sense and aesthetic appearance of the automatic cleaning device.

The platform bottom plate 103 is buckled at the bottom of the mobile platform body 101 and is opposite to the platform cover body 102. The platform bottom plate 103 is provided with an accommodation groove 1031 thereon, and the accommodation groove 1031 is configured to collect the liquid discharged from the liquid drainage hole 10112. An orthographic projection of the liquid drainage hole 10112 on the platform bottom plate 103 falls within the accommodation groove 1031, so that the liquid flowing out of the liquid drainage hole 10112 can naturally fall into the accommodation groove 1031. A sidewall of the accommodation groove 1031 is further provided with a liquid drainage port 1032. The liquid in the accommodation groove 1031 is discharged through the liquid drainage port 1032, which can precisely guide the liquid to flow out in a specific direction and avoid interference with a cleaning task. In some embodiments, the sizes and the quantities of the accommodation grooves 1031 match with the positions and quantities of the liquid drainage holes 10112.

The platform bottom plate 103 further includes a mouth 1033 configured to expose at least part of the dry cleaning module of the automatic cleaning device, so as to be communicated with the mobile platform body 101. The mouth 1033 is arranged adjacent to the accommodation groove 1031. The liquid drainage port 1032 guides the liquid in the accommodation groove 1031 to flow out of the automatic cleaning device through the mouth 1033.

A water-retaining frame 104 on the mobile platform 100 is at least partially arranged around the position determination apparatus 121. FIG. 6 is a schematic structural diagram of the water-retaining frame provided by some embodiments of the present disclosure. As shown in FIG. 6, the water-retaining frame 104 is arranged between the circuit board 105 and the accommodation chamber 1011, so as to prevent the liquid from flowing into the circuit board 105. The circuit board 105 is a circuit component in the automatic cleaning device and is generally located on a side of the position determination apparatus close to the forward portion of the automatic cleaning device.

In some embodiments of the present disclosure, because an external liquid (e.g., water) may flow into the automatic cleaning device through a gap between the position determination apparatus and the platform cover body 102, the water-retaining frame 104 can be used to block the liquid from flowing into the circuit board from a position where the position determination apparatus is located. The water-proofing purpose is thus achieved by arranging the water-retaining frame between the accommodation chamber and the circuit board. In some embodiments, at least a part of the water-retaining frame 104 is located at an edge of a side of the circuit board 105 away from the surface of the platform bottom plate 103.

In some embodiments, the water-retaining frame 104 includes: a bottom wall 1041 arranged at a first end of the circuit board close to the accommodation chamber and extending along at least part of an edge of the first end, and a sidewall 1042 extending in a direction substantially perpendicular to the bottom wall, from an edge of the bottom wall close to the circuit board, with a free end of the sidewall away from the bottom wall being further away from the bottom surface of the mobile platform than the circuit board.

The bottom wall 1041 is of a flat plate structure with a certain width, and the width is a length of the bottom wall extending from one end of the bottom wall close to the circuit board to the accommodation chamber.

The sidewall 1042 includes a first sidewall 10421, a second sidewall 10422 and a third sidewall 10423 oppositely arranged at two ends of the first sidewall, a fourth sidewall 10424 connected to one end of the second sidewall away from the first sidewall, and a fifth sidewall 10425 connected to one end of the third sidewall away from the first sidewall. The first sidewall 10421 is arranged at a first end of the circuit board close to the accommodation chamber. The fourth sidewall and the fifth sidewall are located respectively at two ends of the water-retaining frame 104, and tail ends of the fourth sidewall and the fifth sidewall are free ends. Orthographic projections of the fourth sidewall and the fifth sidewall on the platform bottom plate 103 fall within the accommodation chamber. The fourth sidewall and the fifth sidewall are configured to guide the liquid blocked by the water-retaining frame to fall into the accommodation chamber from the free ends. In some embodiments, the first sidewall, the second sidewall and the third sidewall are all planes.

The water-retaining frame 104 further includes a pivot shaft 1043 configured to be pivotally connected to the position determination apparatus 121, so that at least part of components of the position determination apparatus move relative to the water-retaining frame 104. The pivot shaft 1043 is parallel to and spaced from the first sidewall 10421. Two ends of the pivot shaft 1043 are fixed to the second sidewall 10422 and the third sidewall 10423 respectively.

The water-retaining frame 104 further includes a mounting hole 1044. The mounting hole 1044 is configured to locate the water-retaining frame 104 and fix the water-retaining frame in the mobile platform 100.

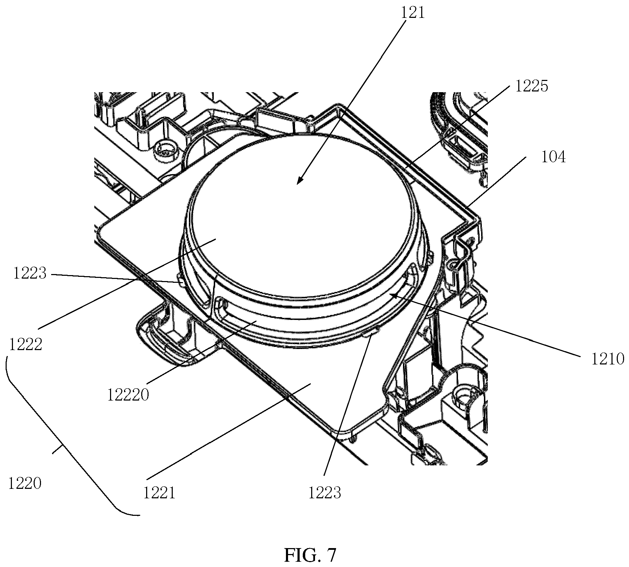

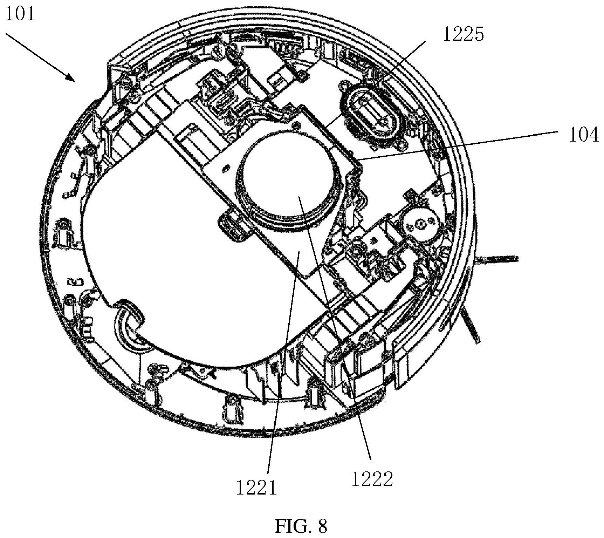

FIG. 7 is a schematic structural diagram of the position determination apparatus in the automatic cleaning device provided by some embodiments of the present disclosure. FIG. 8 is a schematic structural diagram of assembling of the position determination apparatus shown in FIG. 7 and the mobile platform. As shown in FIGS. 7-8, the position determination apparatus 121 is at least partially arranged in the accommodation chamber of the mobile platform body 101. In some embodiments, the position determination apparatus 121 includes a position determination unit 1210 (e.g., a laser ranging unit), and a protection cap 1220. The position determination unit 1210 passes through the opening hole 1021 of the platform cover body and is exposed to the outside. The position determination unit 1210 is rotatable relative to the mobile platform 100 and is configured to measure a horizontal distance between the automatic cleaning device and an obstacle in a circumferential direction.

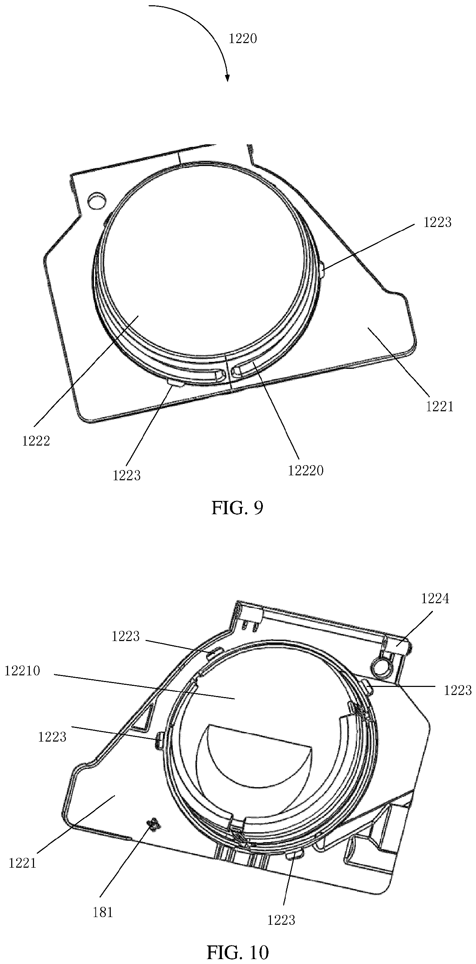

The protection cap 1220 is buckled on the position determination unit 1210 and is configured to protect the position determination unit from being damaged. FIG. 9 is a schematic structural diagram of the protection cap in the position determination apparatus shown in FIG. 7. FIG. 10 is a schematic structural diagram of the protection cap shown in FIG. 9 from another perspective. As shown in FIGS. 9-10, the protection cap 1220 includes a bottom plate 1221, and a buckling cover 1222 that protrudes from the bottom plate. A liquid guide hole 1223 is formed at a junction between the bottom plate 1221 and the buckling cover 1222. One or more liquid guide holes 1223 may be provided. In the case where a plurality of liquid guide holes are provided, they are distributed at that junction at intervals, so that part of the liquid dripping on the bottom plate 1221 enters the accommodation chamber 1011 through the liquid guide holes 1223.

The bottom plate 1221 is of a flat plate structure. An opening 12210 is formed on the bottom plate 1221. The buckling cover 1222 protrudes from the opening 12210 of the bottom plate to a side away from the platform bottom plate 103 and is configured to accommodate the position determination unit 1210. A pivot structure 1224 is arranged on a surface of one end of the bottom plate 1221 close to the platform bottom plate 103. The pivot structure 1224 is adaptive to the pivot shaft 1043, so that the bottom plate 1221 is pivotally connected to the water-retaining frame 104 through the pivot shaft 1043.

At least a part of the bottom plate 1221 is overlapped with the bottom wall of the water-retaining frame 104. A liquid guide groove 1225 is formed between an edge of the bottom plate 1221 close to the water-retaining frame 104 and the sidewall of the water-retaining frame, and the liquid guide groove 1225 is configured to guide the liquid falling on the bottom plate 1221 into the accommodation chamber. That is, the liquid guide groove 1225 is configured to collect the liquid that originally flows to the circuit board and guide this liquid to flow out.

It should be noted that in the present disclosure, the liquid guide hole 1223 and the liquid guide groove 1225 are provided such that when the external liquid entering from the gap of the position determination apparatus 121 falls onto the surface of the bottom plate 1221 and spreads and flows around, part of the liquid flows directly into the accommodation chamber through the liquid guide hole 1223, and such that when part of the liquid flows to the circuit board, it directly flows into the liquid guide groove 1225. Part of the liquid in the liquid guide groove 1225 flows into the accommodation chamber along the first sidewall 10421, the third sidewall 10423 and the fifth sidewall 10425, and part of the liquid flows into the accommodation chamber along the first sidewall 10421, the second sidewall 10422 and the fourth sidewall 10424.

The buckling cover 1222 is of a groove structure and is configured to accommodate at least a part of the position determination unit. The specific shape of the buckling cover 1222 is adaptive to the structure of the position determination unit. In some embodiments, the groove structure is a hollow cylinder. The groove structure is inversely buckled on the opening 12210 of the bottom plate, and an edge of the groove away from the bottom of the groove is engaged with an edge of the opening of the bottom plate. In some embodiments, a specific engagement mode is fixed engagement or detachable engagement. A plurality of windows 12220 are arranged around a sidewall of the groove structure. The position determination unit located in the buckling cover 1222 emits lasers and receives a returned laser signal through the windows 12220.

In response to that the mobile platform 100, the position determination apparatus 121 and the water-retaining frame 104 completing assembling, the liquid entering from a gap between the position determination apparatus 121 and the opening hole of the platform cover body 102 falls onto the surface of the bottom plate 1221 of the position determination apparatus, part of the liquid flows into the accommodation chamber through the liquid guide hole 1223, and part of the liquid flows into the accommodation chamber through the liquid guide groove 1225. Alternatively and additionally, when water vapor is generated in the automatic cleaning device, the water vapor is gathered on an inner surface of the platform cover body 102 to form condensed water, and the water-retaining rib 1022 guides the condensed water to flow onto the surface of the bottom plate of the position determination apparatus, and flows into the accommodation chamber through the liquid guide hole and the liquid guide groove respectively. The liquid gathered in the accommodation chamber 1011 then falls into the accommodation groove 1031 of the platform bottom plate 103 through the liquid drainage hole 10112 at the bottom of the accommodation chamber, and the liquid in the accommodation chamber flows out of the automatic cleaning device through the liquid drainage port 1032 and the mouth 1033, so as to avoid the damage to the circuit board caused by accidental splashing or condensed water. Thus, the automatic cleaning device has a waterproof function.

According to the automatic cleaning device provided by the present disclosure, the water-retaining frame is arranged between the circuit board and the accommodation chamber, which can prevent the liquid flowing from outside flowing into the circuit board and prevent circuit components from being damaged. An original flip-up cover design in the automatic cleaning device is canceled, such that the device structure is simplified, and the technological sense and aesthetic appearance of the automatic cleaning device are improved.

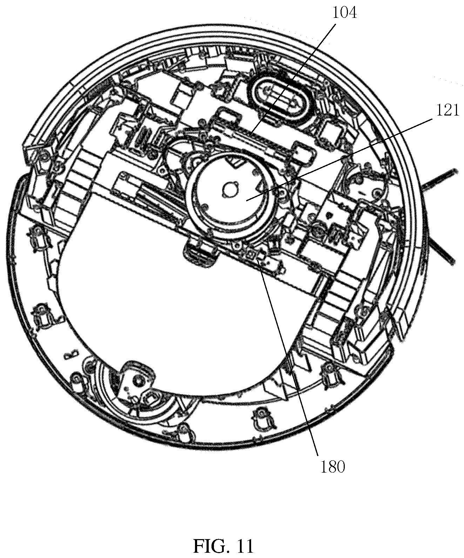

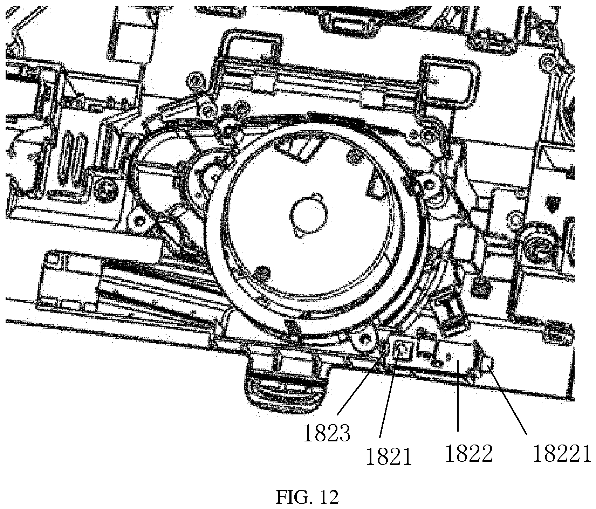

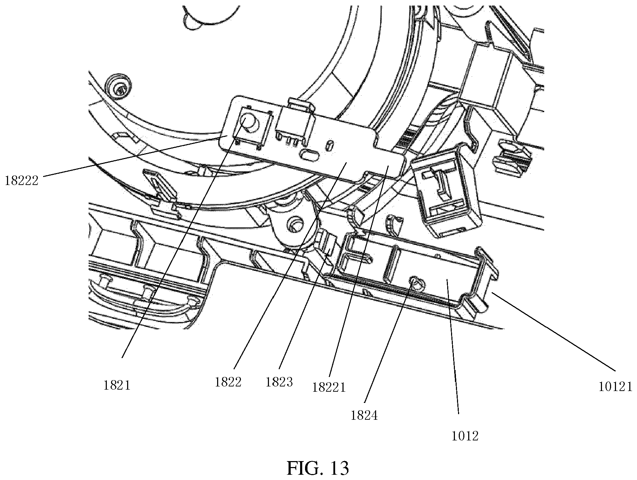

Embodiments of the present disclosure also provide an automatic cleaning device. The automatic cleaning device in the embodiments is different from the automatic cleaning device in the above embodiments in that the automatic cleaning device in the embodiments further includes a triggering system 180. The triggering system 180 includes a triggering protrusion 181 and a triggering assembly 182. FIG. 11 is a schematic structural diagram of assembling of the mobile platform, the position determination apparatus and the triggering assembly according to some embodiments of the present disclosure. FIG. 12 is a schematic structural diagram of a part of the assembly structure shown in FIG. 11. FIG. 13 is an exploded schematic diagram of the triggering assembly shown in FIG. 12.

As shown in FIG. 10, the triggering protrusion 181 is arranged on a bottom surface of the other end of the bottom plate 1221 away from the water-retaining frame 104. The triggering protrusion is of a rigid structure and is configured to exert a pressure on the triggering assembly, and the specific shape of the triggering protrusion is not limited.

As shown in FIGS. 11-13, the triggering assembly 182 is arranged on the mobile platform 100. In some embodiments, the triggering assembly 182 is arranged in the receiving groove 1012 of the mobile platform 100, and the receiving groove 1012 is formed in the backward portion of the automatic cleaning device. In some embodiments, the triggering assembly 182 includes a triggering button 1821 and an elastic plate member 1822. The triggering button 1821 is configured to be pressed by the triggering protrusion so that the automatic cleaning device performs an anti-jamming action. The elastic plate member 1822 is arranged in the receiving groove 1012, and is basically parallel to and spaced from the bottom of the receiving groove. The elastic plate member may be a flat panel, and may be bent under an external force. In some embodiments, the elastic plate member 1822 is made of a flexible material, such as a carbon nanotube film or a polyester film.

The elastic plate member 1822 includes a fixed end portion 18221 and a free end portion 18222. In some embodiments, the elastic plate member 1822 is of a "T" shaped structure, the fixed end portion 18221 is of a strip-shaped structure, and the free end portion 18222 is of a quadrate structure. One end of the free end portion is connected to one end of the fixed end portion, and the fixed end portion 18221 is fixedly connected to the sidewall of the receiving groove 1012, such that the strip-shaped structure is clamped at a bayonet 10121 of the sidewall of the receiving groove, and the free end portion is suspended. The triggering button 1821 is arranged on the elastic plate member and is located at the free end portion 18222. In response to the protection cap 1220 being installed on the mobile platform, the triggering button 1821 faces the triggering protrusion 181, and both of which are separated by a certain distance.

The triggering assembly 182 further includes an anti-upwarp buckle 1823 and a positioning column 1824. The anti-upwarp buckle 1823 is configured to block the springback of the elastic plate member in a direction away from the bottom of the receiving groove 1012 after a pressure is applied to the elastic plate member. The anti-upwarp buckle 1823 is located on a sidewall of the receiving groove 1012 away from the fixed end portion 18221 of the elastic plate member. When the elastic plate member 1822 is in a state where the pressure is not applied, a free end of the anti-upwarp buckle 1823 is as close as possible to the surface of the elastic plate member away from the bottom of the receiving groove 1012.

One end of the positioning column 1824 is fixed to the bottom of the receiving groove 1012, extends upward in a direction perpendicular to the bottom of the receiving groove, and passes through the elastic plate member to fix the elastic plate member.

In the process in which the automatic cleaning device performs a cleaning operation, when the automatic cleaning device is stuck due to the obstruction of an obstacle above, the position determination apparatus 121 pivots around the pivot shaft 1043, and the bottom plate moves in a direction close to the triggering assembly 182. The triggering protrusion 181 located on the bottom plate triggers the triggering button 1821. After the triggering button 1821 is triggered, an anti-jamming control signal is generated and transmitted to the control system 130, so that the control system 130 can generate corresponding control commands to control the cleaning device to perform anti-jamming actions, which include, but are not limited to, stopping, moving back, steering, etc. The triggering button 1821 has a certain pressing stroke, and in general cases, the obstacle above the cleaning device causes the bottom plate 1221 to produce an action, with an amplitude of the action being less than or equal to the pressing stroke of the triggering button 1821, and thus the anti-jamming control signal can be safely generated. When the cleaning device travels too fast and the obstacle above the cleaning device is just too low, a pivoting amplitude of the position determination apparatus 121 may be too large, causing an action amplitude of the bottom plate 1221 that drives the triggering protrusion 181 to exceed the pressing stroke of the triggering button 1821, which may cause damage to the triggering button. However, in a case where the triggering button 1821 is arranged at the free end portion 18222 of the elastic plate member 1822, a pressure brought by the excessive stroke is applied to the free end portion, so that the triggering button 1821 continues to move downward together with the free end portion 18222. As a result, the damage to the triggering button 1821 can be avoided through a buffering action above, the service life of an anti-jamming element is prolonged, and a safety factor of the cleaning device is improved. Meanwhile, when the automatic cleaning device leaves the obstacle above the cleaning device, the elastic plate member 1822 produces a reaction force away from the bottom of the receiving groove and thus springs back. The elastic plate member is finally parallel to a plane where the bottom of the receiving groove is located under the blocking by the anti-upwarp buckle 1823, to prepare for a next possible anti-jamming control signal triggering process. The elastic plate member 1822 is provided to guarantee the operation safety of the triggering button 1821, and meanwhile reduces the use of other additional elements such as springs, such that the device structure is more concise, the elements is easy to be maintained or replaced, and the interference possibly produced by the surrounding metal elements on the position determination unit 1210 can be reduced.

It should be noted that various embodiments in the specification are described in a progressive manner, each embodiment focuses on the differences from other embodiments, and the same or similar parts among the various embodiments may refer to one another. Since the system or device disclosed in the embodiments corresponds to the method disclosed in the embodiments, the description is relatively simple, and the relevant parts may refer to the description of the method parts.

The above embodiments are only used to illustrate the technical solutions of the present disclosure and are not intended to limit the present disclosure. Although the present disclosure has been described in detail with reference to the foregoing embodiments, those of ordinary skills in the art should understand that, they can still make modifications to the technical solutions described in the foregoing embodiments or make equivalent substitutions to some of the technical features, and these modifications or substitutions do not make the essence of the corresponding technical solutions deviate from the spirit and scope of the technical solutions of the various embodiments of the present disclosure.

## Claims

1. An automatic cleaning device, comprising:
a mobile platform comprising an accommodation chamber;
a position determination apparatus, at least partially arranged inside the accommodation chamber;
a circuit board, arranged in the mobile platform and adjacent to the accommodation chamber; and
a water-retaining frame, arranged between the circuit board and the accommodation chamber to prevent liquid from flowing into a circuit.

2. The automatic cleaning device according to claim 1, wherein the water-retaining frame comprises:
a bottom wall, arranged at a first end of the circuit board close to the accommodation chamber and extending along at least a part of an edge of the first end; and
a sidewall, extending from an edge of the bottom wall close to the circuit board in a direction substantially perpendicular to the bottom wall,
wherein a free end of the sidewall away from the bottom wall is further away from a bottom surface of the mobile platform than the circuit board.

3. The automatic cleaning device according to claim 2, wherein the position determination apparatus comprises:
a position determination unit; and
a protection cap, buckled on the position determination unit and comprising:
a bottom plate; and
a buckling cover, protruding from the bottom plate and configured to accommodate at least a part of the position determination unit,
wherein a liquid guide hole is formed at a junction between the bottom plate and the buckling cover, to enable the liquid falling on the bottom plate to fall into the accommodation chamber through the liquid guide hole.

4. The automatic cleaning device according to claim 3, wherein the mobile platform comprises:
a mobile platform body, wherein the accommodation chamber is formed in the mobile platform body; and
a platform cover body comprising an opening hole, wherein the platform cover body substantially covers the bottom plate in response that the platform cover body is buckled on the mobile platform body, and at least a part of the buckling cover passes through the opening hole; and
wherein a water-retaining rib that protrudes toward the mobile platform body is arranged on a side of the platform cover body facing the mobile platform body.

5. The automatic cleaning device according to claim 4, wherein in response that the platform cover body is buckled on the mobile platform body, the water-retaining rib is located between the circuit board and the accommodation chamber, and is located on a side of the water-retaining frame away from the circuit board.

6. The automatic cleaning device according to claim 3, wherein at least a part of the bottom plate overlaps with the bottom wall of the water-retaining frame, and a liquid guide groove is formed between an edge of the bottom plate close to the water-retaining frame and the sidewall of the water-retaining frame, and wherein the liquid guide groove is configured to guide the liquid falling on the bottom plate into the accommodation chamber.

7. The automatic cleaning device according to claim 6, wherein the accommodation chamber is provided with a water-retaining wall, and the water-retaining wall is configured to guide the liquid that enters the accommodation chamber through the liquid guide groove to flow to a bottom of the accommodation chamber, to prevent splashing to the outside.

8. The automatic cleaning device according to claim 1, wherein a liquid drainage hole is formed at a bottom of the accommodation chamber, to enable the liquid collected into the accommodation chamber to flow out of the accommodation chamber.

9. The automatic cleaning device according to claim 8, wherein the mobile platform comprises:
a mobile platform body, wherein the accommodation chamber is formed in the mobile platform body; and
a platform bottom plate, buckled at a bottom of the mobile platform body,
wherein the platform bottom plate is provided with an accommodation groove, the accommodation groove is configured to accommodate the liquid discharged from the liquid drainage hole, and
an orthographic projection of the liquid drainage hole on the platform bottom plate is within the accommodation groove.

10. The automatic cleaning device according to claim 9, wherein a sidewall of the accommodation groove is provided with a liquid drainage port.

11. The automatic cleaning device according to claim 10, wherein the platform bottom plate further comprises:
a mouth, configured to expose at least a part of a dry cleaning module of the automatic cleaning device so as to be communicated with the mobile platform body,
wherein the accommodation groove is adjacent to the mouth, and the liquid drainage port is configured to guide the liquid in the accommodation groove to flow out of the automatic cleaning device through the mouth.

12. The automatic cleaning device according to claim 3, wherein one end of the bottom plate is pivotally connected to the water-retaining frame through a pivot shaft, and a bottom surface of the other end of the bottom plate away from the water-retaining frame is provided with a triggering protrusion; and
wherein the automatic cleaning device further comprises a triggering assembly arranged on the mobile platform, and the triggering assembly comprises a triggering button configured to be pressed by the triggering protrusion, to enable the automatic cleaning device to perform an anti-jamming action.

13. The automatic cleaning device according to claim 12, wherein the mobile platform is provided with a receiving groove, and the triggering assembly further comprises:
an elastic plate member arranged in the receiving groove, wherein elastic plate member the is substantially parallel to a bottom of the receiving groove and is spaced from the bottom of the receiving groove, and the elastic plate member comprises:
a fixed end portion fixedly connected to a sidewall of the receiving groove; and
a free end portion arranged in a suspended manner,
wherein the triggering button is arranged on the elastic plate member and located at the free end portion.

14. The automatic cleaning device according to claim 3, wherein the position determination apparatus is a laser ranging apparatus, and the position determination unit is a laser ranging unit.
